Europäisches Patentamt

European Patent Office

Office européen des brevets

(11) Veröffentlichungsnummer : **0 111 730 B1**

# (12) EUROPÄISCHE PATENTSCHRIFT

(45) Veröffentlichungstag der Patentschrift :
26.03.86

(21) Anmeldenummer : 83111191.9

(22) Anmeldetag : 09.11.83

(51) Int. Cl.⁴ : **B 60 M 1/20**, B 60 M 1/26, B 60 M 7/00

(54) Oberleitung für elektrische Bahnen, insbesondere U-Bahnen, in einem Tunnel.

(30) Priorität : 11.11.82 DE 3241771

(43) Veröffentlichungstag der Anmeldung :
27.06.84 Patentblatt 84/26

(45) Bekanntmachung des Hinweises auf die Patenterteilung : 26.03.86 Patentblatt 86/13

(84) Benannte Vertragsstaaten :
AT CH DE FR GB IT LI

(56) Entgegenhaltungen :
DE-A- 2 834 898
DE-C- 443 287
DE-C- 598 575
DE-C- 712 495
FR-A- 2 470 020
GB-A- 612 450

(73) Patentinhaber : **Siemens Aktiengesellschaft
Berlin und München Wittelsbacherplatz 2
D-8000 München 2 (DE)**

(72) Erfinder : **Müller, Georg
Obere Büch 2
D-8521 Buckenhof (DE)**
Erfinder : **Menhorn, Hermann
Berliner Strasse 157
D-2410 Mölln (DE)**

**Beschreibung**

Die Erfindung bezieht sich auf eine Oberleitung für elektrische Bahnen, insbesondere U-Bahnen, in einem Tunnel, bei der ein profilierter Fahrdraht zur Aufnahme von Wärmedehnungen in gewundener Form über Halter in Längsrichtung unverschieblich aufgehängt ist und einen ununterbrochenen Strang bildet.

Aus der DE-PS 598 575 ist eine Oberleitung dieser Art, insbesondere für Kranfahrleitungen, bekannt, die aus einer eisernen Tragschiene und einem auf dieser in gewundener Form auswechselbar angeordneten Fahrdraht aus Kupfer oder einem anderen Nichteisenmetall besteht. Dabei liegen die größten seitlichen Ausbiegungen des gewundenen Fahrdrahtes jeweils an den Stellen, an denen er durch die Halter an der Tragschiene befestigt ist. Dehnt sich der Fahrdraht in Folge Erwärmung mehr aus als die Tragschiene, so wird die Differenz zwischen der Ausdehnung des Fahrdrahtes und der Tragschiene in seinen Bögen aufgenommen. Die Längenausdehnung der eisernen Tragschiene in Folge Erwärmung bleibt dabei bestehen. Die bekannte Kranfahrleitung kann daher nur eine begrenzte Länge haben und die eiserne Tragschiene kann nur an einem Stützpunkt unverschieblich aufgehängt werden und muß an den weiteren Stützpunkten längsverschieblich geführt sein. Bei Längen, die größer sind als 150 m, werden in der Tragschiene Dehnstöße erforderlich. Weiter kann nicht sicher vermieden werden, daß sich der im wesentlichen einen runden Querschnitt aufweisende Fahrdraht bei Temperaturänderungen auch in senkrechter Richtung ausbiegt. Ferner erfolgt die Stromabnahme am Fahrdraht von oben. Daher ist die bekannte Ausführung für elektrische Bahnen, insbesondere Bahnen mit höheren Geschwindigkeiten, nicht geeignet.

Aus der DE-OS 30 42 855 ist eine Oberleitung für elektrische Bahnen in einem Tunnel bekannt, bei der an Stützpunkten der Tunneldecke eine Tragschiene aufgehängt ist, die beispielsweise als I-Träger ausgebildet sein kann. An den Flanschen dieser Tragschiene sind in kurzen Abständen mittels Befestigungseinrichtungen, die zum Teil als Pendel ausgebildet sind, ein oder zwei Fahrdrähte aufgehängt. Der Fahrdraht ist beweglich an der Tragschiene so angeordnet, daß er sich längs der Tragschiene frei ausdehnen kann. Dabei werden mehrere Tragschienen zu einem Leitungsabschnitt aneinandergereiht. Innerhalb jedes Leitungsabschnittes muß der Fahrdraht mittels einer Spanneinrichtung, z. B. einer Feder, unter Zugspannung gehalten werden, um die Längenänderungen des Fahrdrahtes infolge Erwärmung auszugleichen. Die Tragschienen werden ähnlich wie dies bei der Fahrdrahtaufhängung üblich ist, in Zickzack-Anordnung verlegt, um einen gleichmäßigen Abrieb der Schleifleiste des Stromabnehmers zu gewährleisten. Dabei bilden die Wendepunkte der Zickzack-Anordnung jeweils einen unverschieblichen Stützpunkt, d. h. einen Festpunkt für die zum Aufhängen des Fahrdrahtes erforderlichen Tragschienen. Beiderseits eines jeden unverschieblichen Stützpunktes sind die Tragschienen an Isolatoren mit Gleitflächen, die in Abständen von einigen Metern angeordnet sind, längsverschieblich an Stützpunkten aufgehängt, so daß sich die Enden der Leitungsabschnitte ausdehnen können, wobei sie sich überlappen. An benachbarten Enden der Tragschienen sind jeweils Dehnstöße vorgesehen. Diese Oberleitung kann zwar in einem Tunnel mit geringer Höhe angewendet werden, es sind jedoch Nachspannvorrichtungen für den Fahrdraht sowie Dehnstöße und Gleitlager für die Tragschienen erforderlich.

Der Erfindung liegt die Aufgabe zugrunde eine Oberleitung der eingangs genannten Art anzugeben, bei der der Fahrdraht in unbegrenzter Länge ohne aufwendige Dehnstöße und ohne Nachspannvorrichtungen auch bei höheren Fahrgeschwindigkeiten anwendbar ist und einen wartungsarmen Betrieb ermöglicht.

Diese Aufgabe wird erfindungsgemäß dadurch gelöst, daß der Fahrdraht als von unten bestrichene Stromschiene ausgebildet ist, die hochkant angeordnet und an allen Stützpunkten über die Halter an der Tunneldecke befestigt ist, wobei die Halter an der Tunneldecke unverschiebliche Stützpunkte bilden und daß die gewundene Form der Stromschiene durch eine seitliche Aufbiegung zwischen aufeinanderfolgenden Haltern gebildet ist.

Auf diese Weise werden besondere Tragschienen für den Fahrdraht, gleitende Aufhängungen an Stützpunkten sowie Nachspannvorrichtungen entbehrlich, so daß eine erhebliche Vereinfachung im Aufbau der Oberleitung, eine höhere Betriebssicherheit und Herabsetzung der Montagezeit erzielt wird. Durch die selbsttragende Ausbildung der Oberleitung und die in Längsrichtung unverschiebliche Aufhängung der Stromschiene an der Tunneldecke kann ferner eine höhengenaue Führung der Stromschiene gewährleistet werden, so daß die Voraussetzungen für das Befahren mit hohen Geschwindigkeiten geschaffen werden.

Die erfindungsgemäße Oberleitung kann mit Vorteil auch in einem Tunnel für U-Bahnen anstelle einer dritten Schiene angewendet werden. Dabei kann die an der Tunneldecke angeordnete Stromschiene auf freier Strecke als übliche Kettenwerksoberleitung mit Fahrdraht und Tragseil weitergeführt werden. Dadurch wird für U-Bahnen eine aufwendige Einzäunung gegenüber einer Anordnung mit einer auf freier Strecke geführten dritten Schiene entbehrlich.

In der Zeichnung sind Ausführungsbeispiele der Erfindung schematisch dargestellt. Darin zeigen :
Figur 1 eine Führung der Stromschiene in Zickzack-Form in Draufsicht,
Figur 2 eine Führung der Stromschiene nach Art einer Sinuskurve in Draufsicht,

Figur 3 eine Führung zweier spiegelbildlich angeordneter Stromschienen nach Art zweier gegenläufiger Sinuskurven mit einer Aufhängung an in der Oberleitungsachse liegenden Haltern,

Figur 4 eine spiegelbildliche Aufhängung zweier Stromschienen nach Art zweier gegenläufiger Sinuskurven mit Aufhängung an gegenüberliegenden äußeren Haltern,

Figur 5 eine Aufhängung mehrerer paralleler Stromschienen in Draufsicht,

Figur 6 einen Querschnitt einer Oberleitung mit einem in Längsrichtung, seitlich und in der Höhe unverschieblichen Halter an einer Tunneldecke,

Figur 7 einen Querschnitt einer Oberleitung mit einem in Längsrichtung und seitlich starren, in der Höhe jedoch elastischem Halter,

Figur 8 eine Draufsicht zu Fig. 7,

Figur 9 einen Halter für den Fahrdraht und

Figur 10 eine sinusförmige Anordnung der Halter.

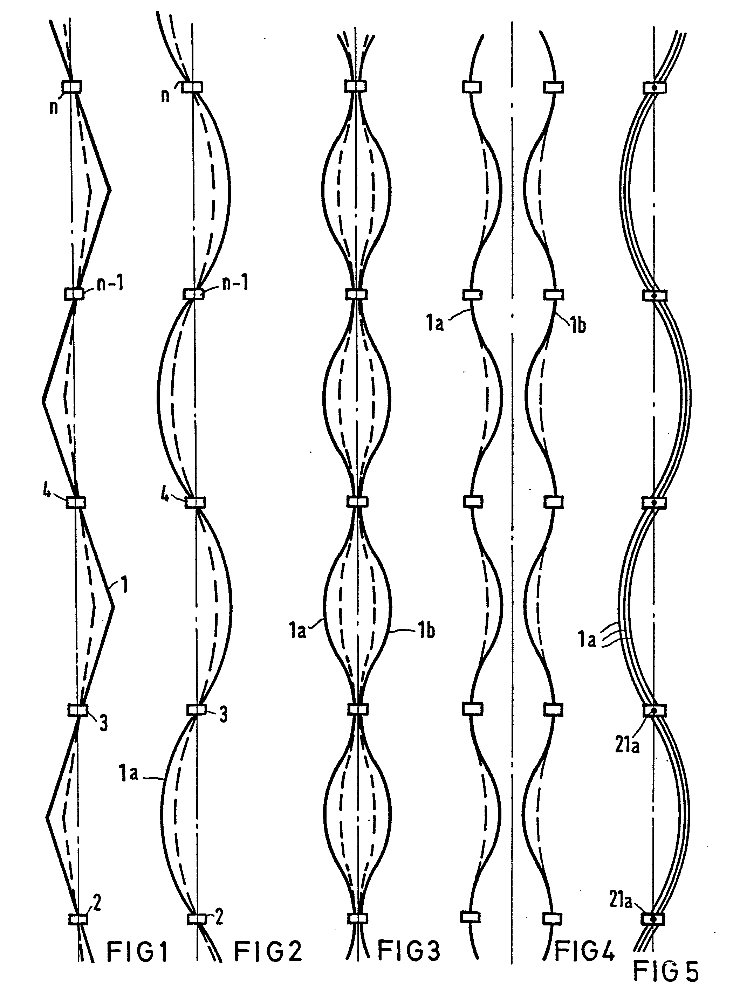

In der in Fig. 1 gezeigten Draufsicht einer Oberleitung für einen Tunnel ist eine hochkant angeordnete profilierte Stromschiene 1 in gewundener Form an Haltern 2, 3 und 4 bis n in der Längsrichtung an allen Stützpunkten der Tunneldecke 13 unverschieblich aufgehängt. Die gewundene Form ist dadurch gebildet, daß die Stromschiene 1 zwischen den aufeinanderfolgenden und unverschieblichen Haltern 2 bis n, die zweckmäßigerweise einen Abstand von 2 bis 8 m haben, jeweils seitlich ausgebogen ist, so daß eine Zickzack-Form entsteht, wobei die Halter in der Fahrachse (strichpunktiert) liegen. Die hochkant angeordnete Stromschiene ist aus einem aus Teilstücken zusammengesetzten ununterbrochenen Strang gebildet, der auf der Baustelle von einer großen Trommel abgewickelt werden kann. Die Stromschiene kann auch vor Ort aus Teilstücken zu einem ununterbrochenen Strang zusammengesetzt werden. Zweckmäßigerweise wird für die Teilstücke eine Länge von 6 bis 30 m gewählt, wobei die einzelnen Teilstücke zu einem Strang verschraubt, vernietet oder zusammengeschweißt werden können. Durch die bei Kälteeinwirkung entstehenden Kräfte wird die Stromschiene verformt, so daß sie die gestrichelt dargestellte Lage einnimmt. Bei Wärmeeinwirkung entsteht eine größere Ausbauchung der Stromschiene.

Wie in Fig. 2 dargestellt, kann die Stromschiene 1a auch nach Art einer Sinuskurve gebogen und an in der Oberleitungsachse liegenden Haltern 2 bis n in den Nulldurchgängen der Sinuskurve aufgehängt sein.

Für Bahnen mit größeren Speiseströmen ist es vorteilhaft, zwei oder mehr elektrisch parallel geschaltete Stromschienen vorzusehen (siehe Fig. 3 bis 5).

Dabei sind nach Fig. 3 bei Verwendung zweier elektrisch parallel geschalteter Stromschienen 1a, 1b und spiegelbildlicher Anordnung die Ausbiegungen nach außen gerichtet. An den Taillenpunkten ist jeweils ein gemeinsamer Halter 2 bis n vorgesehen.

Fig. 4 zeigt eine Anordnung, bei der zwei spiegelbildlich angeordnete elektrisch parallel geschaltete Stromschienen 1a, 1b mit nach innen gerichteten Ausbiegungen versehen sind. Dabei sind die Stromschienen 1a, 1b an den am weitesten voneinander entfernten Punkten in Stützpunkten 2 bis n in der Längsrichtung unverschieblich aufgehängt.

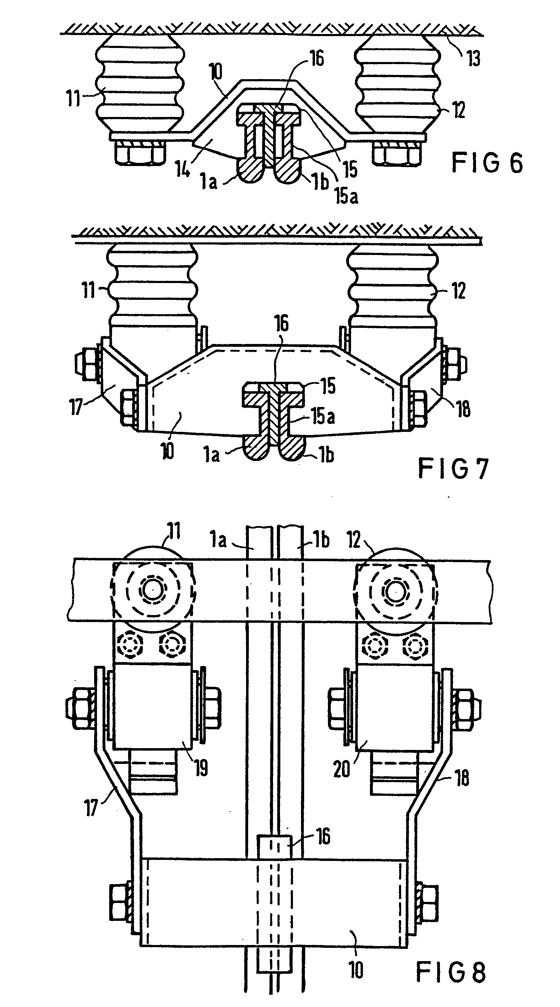

Gemäß Fig. 5 sind drei Fahrdrähte 1a nebeneinander angeordnet.

In Fig. 6 sind zwei profilierte von unten bestrichene Stromschienen 1a, 1b an allen Stützpunkten über starre Halter an der Tunneldecke 13 aufgehängt. Zur Halterung dient eine Traverse 10, die über Isolatoren 11, 12 mittels Schrauben an der Tunneldecke 13 befestigt ist. Die Traverse 10 besitzt einen Quersteg 14 mit einem T-förmigen Ausschnitt 15, in dem die beiden hochkant angeordneten Stromschienen 1a, 1b eingehängt und durch einen T-förmigen Keil 16, der zwischen die beiden Stromschienen 1a, 1b getrieben wird, seitlich, in der Höhe und in der Längsrichtung unverschieblich festgehalten werden. Ballige Führungsflächen 15a ermöglichen eine geringe Drehbewegung der Stromschienen 1a, 1b um eine senkrechte Achse.

Die Figuren 7 und 8 zeigen einen in Längsrichtung und seitlich unverschieblich, jedoch in der Höhe nachgiebigen Halter, der eine elastisch gedämpfte Stromabnahme gewährleistet. Dabei ist die Traverse 10 in an sich bekannter Weise an Hebeln 17, 18 je eines Gummifederelementes 19 bzw. 20 gelagert. Die Gummifederelemente 19, 20 sind ihrerseits über Isolatoren 11, 12 an der Tunneldecke 13 befestigt.

Bei den in den Fig. 1, 2 und 5 gezeigten Ausgestaltungen bedingen die Temperaturänderungen in den Haltern eine geringe Änderung des Winkels, den die Stromschiene 1a gegenüber der Oberleitungsachse einnimmt. Werden Oberleitungen gemäß Fig. 1 bis 5 in einem Bogen angeordnet, so ist eine genaue tangentiale Montage der Halter sehr zeitaufwendig. Daher wird die Stromschiene 1a um in der Fig. 5 angedeutete senkrechte Achsen 21a drehbar aufgehängt.

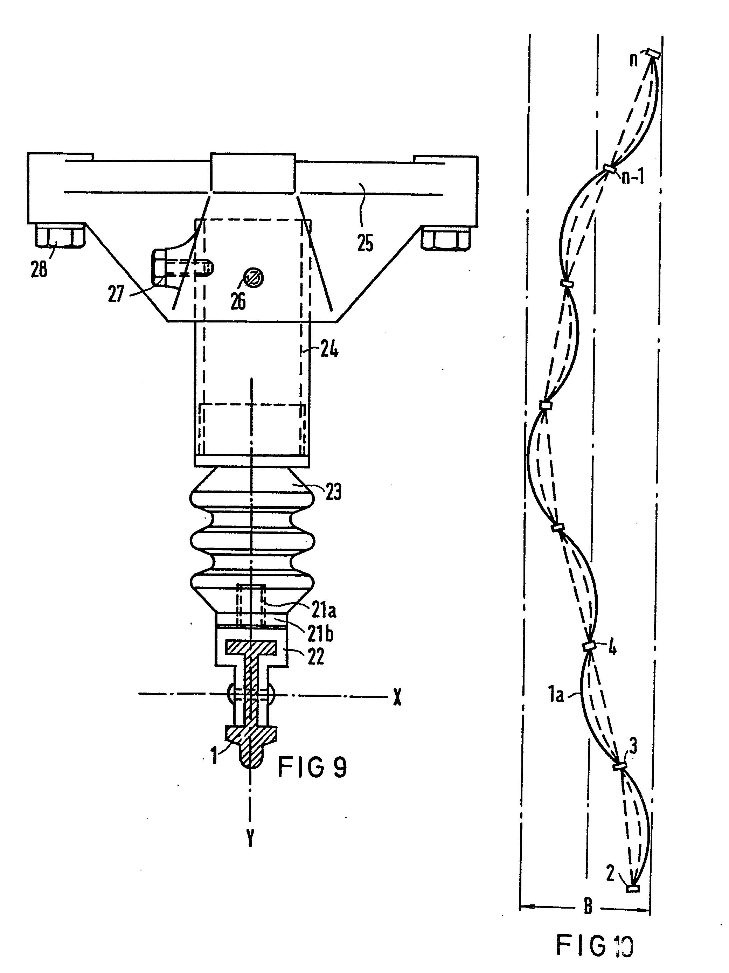

Fig. 9 zeigt einen Halter, der aus zwei um eine senkrechte Achse 21a gegeneinander drehbaren Teilen besteht. Der eine Teil wird durch eine Stromschienenklemme 22 mit einer daran angegossenen senkrechten Achse 21a gebildet, während der andere Teil aus einem die senkrechte Achse 21 a aufnehmenden Lager 21b, einem Isolator 23, einem Rohr 24 und einer Ankerplatte 25 besteht. Die Ankerplatte 25 wird mittels zweier Befestigungsschrauben 28 an der Decke des Tunnels fest angeschraubt. In einfachster Weise ist die senkrechte Achse 21a und das Lager 21b aus einem am Stromschienenhalter angegossenen Gewindebolzen gebildet, der in eine als Lager 21b dienende Gewindebohrung im Isolator 23 eingedreht ist und dort Drehbewegungen ausführen kann.

Das Rohr 24 ist einerseits am Isolator 23 befestigt und wird andererseits für eine Höhenfeinein-

**0 111 730**

stellung an der Ankerplatte 25 durch eine Stellschraube 26 fixiert. Die Länge des Rohres 24 kann der jeweiligen Höhenlage der Stromschiene angepaßt und mit einem Zentrierstift 27 in der Endlage festgehalten werden.

Die profilierte Stromschiene 1 weist einen Querschnitt auf, dessen Trägheitsmoment um die waagrechte Biegeachse x größer ist als um die senkrechte Biegeachse y.

Es ist vorteilhaft, die Halter 2 bis n für die Stromschiene 1a nach Art einer Sinuslinie an der Tunneldecke 13 zu befestigen (Fig. 10), um eine gleichmäßige Abnutzung des Stromabnehmerschleifstückes auf seiner Breite B zu bewirken.

<div align="center">Bezugszeichenliste</div>

| | |
|---|---|
| 1, 1a, 1b | Stromschiene |
| 2 bis n | Halter |
| 10 | Traverse |
| 11, 12 | Isolatoren |
| 13 | Tunneldecke |
| 14 | Querstege |
| 15 | T-förmig. Ausschnitt |
| 15a | Führungsflächen |
| 16 | T-förmig. Keil |
| 17, 18 | Hebel |
| 19, 20 | Gummifederelemente |
| 21a | senkrechte Achse |
| 21b | Lager |
| 22 | Fahrdrahtklemme |
| 23 | Isolator |
| 24 | Rohr |
| 25 | Ankerplatte |
| 26 | Stellschraube |
| 27 | Zentrierstift |
| 28 | Befestigungsschraube |
| x | waagrechte Biegeachse |
| y | senkrechte Biegeachse |
| B | Breite des Schleifstückes |

**Patentansprüche**

1. Oberleitung für elektrische Bahnen, insbesondere U-Bahnen, in einem Tunnel, bei der ein profilierter Fahrdraht (1) zur Aufnahme von Wärmedehnungen in gewundener Form über Halter (2 bis n) in Längsrichtung unverschieblich aufgehängt ist und einen ununterbrochenen Strang bildet, dadurch gekennzeichnet, daß der Fahrdraht als von unten bestrichene Stromschiene (1) ausgebildet ist, die hochkant angeordnet und an allen Stützpunkten über die Hälter (2 bis n) an der Tunneldecke (13) befestigt ist, wobei die Halter an der Tunneldecke (13) unverschiebliche Stützpunkte bilden und daß die gewundene Form der Stromschiene (1) durch eine seitliche Ausbiegung zwischen aufeinanderfolgenden Haltern (2 bis n) gebildet ist.

2. Oberleitung nach Anspruch 1, dadurch gekennzeichnet, daß die Halter aus zwei um eine senkrechte Achse (21a) gegeneinander drehbaren Teilen bestehen.

3. Oberleitung nach Anspruch 2, dadurch gekennzeichnet, daß der eine Teil der Halter (2 bis n) durch eine Stromschienenklemme (22) mit daran angeformter senkrechter Achse (21a) gebildet ist, während der andere Teil aus einem die senkrechte Achse (21a) aufnehmenden Lager (21b), einem Isolator (23), einem Rohr (24) und einer Ankerplatte (25) besteht.

4. Oberleitung nach Anspruch 3, dadurch gekennzeichnet, daß das Rohr (24) zur Höhenfeineinstellung an der Ankerplatte (25) oder am Isolator (23) verstellbar befestigt, insbesondere durch eine Stellschraube (26) fixierbar ist.

5. Oberleitung nach Anspruch 1, dadurch gekennzeichnet, daß die Stromschiene (1, 1a) einen Querschnitt aufweist, dessen Trägheitsmoment um die waagrechte Biegeachse (x) größer ist als um die senkrechte Biegeachse (y).

6. Oberleitung nach Anspruch 1, bei der die Stromschiene nach Art einer Sinuskurve gebogen ist, dadurch gekennzeichnet, daß die Halter (2 bis n) in den Nulldurchgängen der Sinuskurve angeordnet sind.

7. Oberleitung nach einem der vorhergehenden Ansprüche, dadurch gekennzeichnet, daß zwei oder mehrere spiegelbildlich zur Oberleitungsachse oder parallel zueinander angeordnete Stromschienen (1a, 1b) vorgesehen sind.

<div align="center">4</div>

**0 111 730**

8. Oberleitung nach Anspruch 5, dadurch gekennzeichnet, daß bei Verwendung zweier Stromschienen (1a, 1b) die seitlichen Ausbiegungen nach außen gerichtet sind (Fig. 3).

9. Oberleitung nach Anspruch 5, dadurch gekennzeichnet, daß bei Verwendung zweier Stromschienen (1a, 1b) die seitlichen Ausbiegungen nach innen gerichtet sind (Fig. 4).

10. Oberleitung nach Anspruch 1 oder 6, dadurch gekennzeichnet, daß die Halter (2 bis n) für die Stromschiene (1a) nach einer Sinuslinie an der Decke angeordnet sind (Fig. 10).

**Claims**

1. An overhead conductor for electric railways, in particular underground railways, in a tunnel, in which a profiled overhead contact wire (1) which, for taking up thermal expansion, is non-displaceably suspended in sinuous form by holders (2 to n) in the longitudinal direction and forms an uninterrupted strand, characterised in that the overhead contact wire is designed as a live rail (1) which is swept over from below and which is arranged in an upright fashion and secured to the tunnel roof (13) at all supporting points by means of the holders (2 to n), the holders forming non-displaceable supports on the tunnel roof (13) ; and that the sinuous form of the live rail (1) is produced by a lateral bend between consecutive holders (2 to n).

2. An overhead conductor as claimed in Claim 1, characterised in that the holders consist of two parts which can be rotated one against another about a vertical axis (21a).

3. An overhead conductor as claimed in Claim 2, characterised in that one part of the holders (2 to n) is formed by a live rail terminal (22) with an attached vertical shaft (21a), whilst the other part consists of a bearing (21b) which accommodates the vertical shaft (21a), an insulator (23), a pipe (24) and an anchoring plate (25).

4. An overhead conductor as claimed in Claim 3, characterised in that, for vertical fine adjustment, the pipe (24) is adjustably secure to the anchoring plate (25), or the insulator (23), in particular by means of an adjusting screw (26).

5. An overhead conductor as claimed in Claim 1, characterised in that the live rail (1, 1a) has a cross-section, the moment of inertia of which about the horizontal bending axis (x) is greater than about the vertical bending axis (y).

6. An overhead conductor as claimed in Claim 1, in which the live rail is bent in the form of a sine curve, characterised in that the holders (2 to n) are arranged in the zero transits of the sine curve.

7. An overhead conductor as claimed in one of the preceding Claims, characterised in that two or more live rails (1a, 1b) are provided, which are arranged in a mirror-image fashion relative to the axis of the overhead conductor, or parallel to one another.

8. An overhead conductor as claimed in Claim 5, characterised in that, when two live rails (1a, 1b) are used (Fig. 3), the lateral bends are outwardly directed.

9. An overhead conductor as claimed in Claim 5, characterised in that, when two live rails (1a, 1b) are used (Fig. 4), the lateral bends are inwardly directed.

10. An overhead conductor as claimed in Claim 1 or Claim 6, characterised in that the holders (2 to n) for the live rail (1a) are arranged in accordance with a sine curve on the roof (Fig. 10).

**Revendications**

1. Ligne aérienne prévue pour des chemins de fer électriques, notamment des métros, dans un tunnel et dans lequel, en vue d'absorber des dilatations thermiques, une caténaire profilée (1) est suspendue selon une forme sinueuse au moyen de supports (2 à n) de manière à être immobile suivant la direction longitudinale et forme un conducteur ininterrompu, caractérisée par le fait que la caténaire est réalisée sous la forme d'un rail de contact (1), contre la face inférieure duquel s'effectue le déplacement et qui est disposé de chant et est fixé au niveau de tous les points de soutien par l'intermédiaire des supports (2 à n) au plafond (13) du tunnel, les supports montés au plafond (13) du tunnel formant des points de soutien immobiles, et que la forme sinueuse du rail de contact (1) est obtenue grâce à un cintrage latéral entre des supports (2 à n) successifs.

2. Ligne aérienne suivant la revendication 1, caractérisée par le fait que les supports sont constitués par deux parties pouvant tourner l'une par rapport à l'autre autour d'un axe vertical (21a).

3. Ligne aérienne suivant la revendication 2, caractérisée par le fait qu'une partie des supports (2 à n) est formée par une pince (22) du rail de contact sur laquelle est réalisé par façonnage un axe vertical (21a), tandis que l'autre partie est constituée par un logement (21b) recevant l'axe vertical (21a), à un isolateur (23), par un tube (24) et par une plaque d'ancrage (25).

4. Ligne aérienne suivant la revendication 3, caractérisée par le fait que le tube (24) est fixé de manière à être déplaçable, en vue d'un réglage en hauteur précis, sur la plaque d'ancrage (25) et sur l'isolateur (23), et peut être fixé notamment au moyen d'une vis de réglage (26).

5. Ligne aérienne suivant la revendication 1, caractérisée par le fait que le rail de contact (1, 1a) possède une section transversale dont le moment d'inertie par rapport à l'axe horizontal de flexion (x) est supérieur au moment d'inertie par rapport à l'axe vertical de flexion (y).

6. Ligne aérienne suivant la revendication 1, dans laquelle le rail de contact est cintré sous la forme

**0 111 730**

d'une courbe sinusoïdale, caractérisée par le fait que les supports (2 à n) sont disposés au niveau des annulations de la courbe sinusoïdale.

7. Ligne aérienne suivant l'une des revendications précédentes, caractérisée par le fait qu'il est prévu deux ou plusieurs rails de contact (1a, 1b) disposés symétriquement par rapport à l'axe de la ligne aérienne ou parallèlement entre eux.

8. Ligne aérienne suivant la revendication 5, caractérisée par le fait que dans le cas de l'utilisation de deux rails de contact (1a, 1b), les parties bombées latérales sont dirigées vers l'extérieur (figure 3).

9. Ligne aérienne suivant la revendication 5, caractérisée par le fait que dans le cas de l'utilisation de deux rails de contact (1a, 1b), les parties bombées latérales sont dirigées vers l'intérieur (figure 4).

10. Ligne aérienne suivant la revendication 1 ou 6, caractérisée par le fait que les supports (2 à n) pour le rail de contact (1a) sont montés sur une courbe sinusoïdale au plafond (figure 10).

FIG1  FIG2  FIG3  FIG4  FIG 5

FIG 6

FIG 7

FIG 8

FIG 9

FIG 10